# EUROPEAN PATENT APPLICATION

(11) **EP 3 565 301 A1**
(43) Date of publication of application: **06.11.2019**
(21) Application number: 16925654.2
(22) Date of filing: 30.12.2016
(51) Int. Cl.: H04W 24/10, H04W 68/00

(54) **TRANSMISSION APPARATUS AND METHOD CAPABLE OF SUPPRESSING INTERFERENCE INFORMATION, AND COMMUNICATION SYSTEM**

(71) Applicant: Fujitsu Limited, Kawasaki-shi, Kanagawa 211-8588 (JP)
(72) Inventor: WANG, Weiwei, Beijing 100027 (CN); ZHOU, Hua, Beijing 100027 (CN); WANG, Xin, Beijing 100027 (CN)
(74) Representative: Haseltine Lake Kempner LLP
(86) International application number: PCT/CN2016/113607
(87) International publication number: WO 2018/120064

(57) **Abstract**

A transmission apparatus and method of suppressing interference information and a communication system. The transmission method includes: transmitting reporting information used for suppressing dynamic TDD crosslink interference by a user equipment to a serving network device or one or more neighboring network devices. Hence, by reporting information used for suppressing interference by the user equipment to the serving network device or one or more neighboring network devices, the information may be punctually notified to the one or more neighboring network devices, thereby efficiently suppressing crosslink interference of a dynamic TDD system.

## Description

### Technical Field

This disclosure relates to the field of communication technologies, and in particular to a transmission apparatus and method of suppressing interference information and a communication system.

### Background

In a new radio (NR) system, dynamic time division duplex (TDD) supports uplink and downlink configurations dynamically allocating data transmission by taking a time unit (such as a slot) as a basic unit. Hence, each transmission direction between a network device (such as a gNB) and a user equipment may possibly be changed dynamically by taking a time unit (such as a slot) as a basic unit.

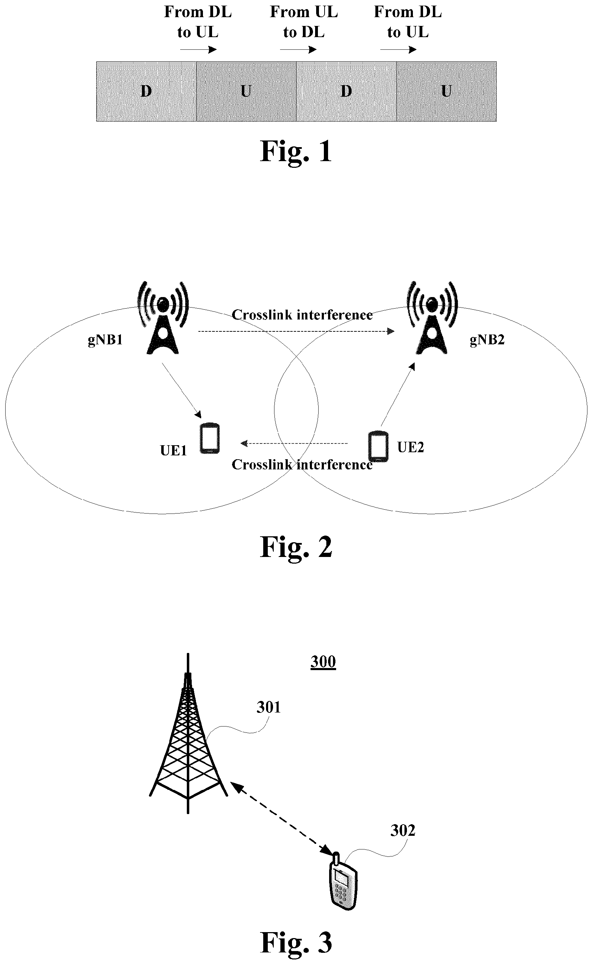

FIG. 1 is a schematic diagram of a transmission direction of a dynamic TDD. As shown in FIG. 1, at a certain time unit (such as a first slot), a data transmission direction of a network device is of a downlink (DL), and at a next time unit (such as a second slot), the data transmission direction of the network device may possibly become into an uplink (UL).

If dynamic TDD is adopted in the NR system, the data transmission direction needs to be changed frequently, which may cause severe crosslink interference (CLI) between neighboring cells.

FIG. 2 is a schematic diagram of use of the dynamic TDD in the NR system. As shown in FIG 2, in a certain slot, for example, a network device gNB1 transmits downlink data to a user equipment UE1 in a local cell (cell 1) by using the dynamic TDD, and a user equipment UE2 of a serving cell (cell 2) transmits uplink data to a network device gNB2 by using the dynamic TDD; crosslink interference may be generated between UE1 and UE2, and crosslink interference may also be generated between gNB1 and gNB2.

In order to reduce crosslink interference, network devices need to coordinate with each other. For example, if gNB2 knows that the transmission direction between gNB1 and UE1 in the slot is of downlink, a transmission direction between gNB2 and UE2 may also be scheduled to be of downlink or no data transmission is performed, thereby reducing crosslink interference.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that when the dynamic TDD is adopted, configuration information is dynamically transmitted. For example, uplink and downlink transmission directions of a certain slot are configured by the network device only in a first symbol or first several symbols in the slot (or a previous slot of the slot). If a traditional backhaul between network devices is used to exchange such information (such as information of transmission directions), as delay of a non-ideal backhaul is relatively large, it is difficult to notify the information to neighboring network devices in a short period of time.

Embodiments of this disclosure provide a transmission apparatus and method of suppressing interference information and a communication system, in which by reporting information used for suppressing interference by the user equipment to the serving network device or the neighboring network devices, the information may be punctually notified to the neighboring network devices, thereby efficiently suppressing crosslink interference of a dynamic TDD system.

According to a first aspect of the embodiments of this disclosure, there is provided a transmission method of suppressing interference information, applicable to a user equipment performing dynamic time division duplex, the transmission method including:
transmitting reporting information used for suppressing dynamic time division duplex crosslink interference by the user equipment to a serving network device or one or more neighboring network devices;
the reporting information includes one or more pieces of the following information:
information on a transmission direction of a serving cell within a specific time range, information on a transmission direction/transmission directions of one or more neighboring cells within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

According to a second aspect of the embodiments of this disclosure, there is provided a transmission apparatus of suppressing interference information, configured in a user equipment performing dynamic time division duplex, the transmission apparatus including:
a reporting unit configured to transmit reporting information used for suppressing dynamic time division duplex crosslink interference to a serving network device or one or more neighboring network devices;
the reporting information includes one or more pieces of the following information:
   information on a transmission direction of a serving cell within a specific time range, information on a transmission direction/transmission directions of one or more neighboring cells within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

According to a third aspect of the embodiments of this disclosure, there is provided a transmission method of suppressing interference information, applicable to a network device performing dynamic time division duplex, the transmission method including:
receiving reporting information used for suppressing dynamic time division duplex crosslink interference transmitted by one or more user equipments of a local cell or a neighboring cell;
the reporting information includes one or more pieces of the following information:
   information on a transmission direction of a serving cell of the user equipment within a specific time range, information on a transmission direction/transmission directions of one or more neighboring cells of the user equipment within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

According to a fourth aspect of the embodiments of this disclosure, there is provided a transmission apparatus of suppressing interference information, configured in a network device performing dynamic time division duplex, the transmission apparatus including:
a receiving unit configured to receive reporting information used for suppressing dynamic time division duplex crosslink interference transmitted by one or more user equipments of a local cell or a neighboring cell;
the reporting information includes one or more pieces of the following information:
   information on a transmission direction of a serving cell of the user equipment within a specific time range, information on a transmission direction/transmission directions of one or more neighboring cells of the user equipment within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

According to a fifth aspect of the embodiments of this disclosure, there is provided a communication system, including:
a user equipment including the transmission apparatus of suppressing interference information as described in the second aspect; and
a network device including the transmission apparatus of suppressing interference information as described in the fourth aspect.

An advantage of the embodiments of this disclosure exists in that by reporting information used for suppressing interference by the user equipment to the serving network device or one or more neighboring network devices, the information may be punctually notified to the one or more neighboring network devices, thereby efficiently suppressing crosslink interference of a dynamic TDD system.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals assign corresponding parts throughout the several views and may be used to assign like or similar parts in more than one embodiment.
FIG. 1 is a schematic diagram of a transmission direction of dynamic TDD;
FIG. 2 is a schematic diagram of use of dynamic TDD in an NR system;
FIG. 3 is a schematic diagram of a communication system of an embodiment of this disclosure;
FIG. 4 is a schematic diagram of the transmission method of suppressing interference information of Embodiment 1 of this disclosure;
FIG. 5 is a schematic diagram of transmitting notification information by a network device of Embodiment 1 of this disclosure;
FIG. 6 is an exemplary diagram of an information transmission method of Embodiment 1 of this disclosure;
FIG. 7 is another exemplary diagram of an information transmission method of Embodiment 1 of this disclosure;
FIG. 8 is a schematic diagram of a time unit structure of Embodiment 1 of this disclosure;
FIG. 9 is another schematic diagram of the time unit structure of Embodiment 1 of this disclosure;
FIG. 10 is a schematic diagram of multiple time units adopting format 1 of Embodiment 1 of this disclosure;
FIG. 11 is a further schematic diagram of the time unit structure of Embodiment 1 of this disclosure;
FIG. 12 is yet another schematic diagram of the time unit structure of Embodiment 1 of this disclosure;
FIG. 13 is a schematic diagram of multiple time units adopting format 2 of Embodiment 1 of this disclosure;
FIG. 14 is a schematic diagram of the transmission method of suppressing interference information of Embodiment 2 of this disclosure;
FIG. 15 is another schematic diagram of the transmission method of suppressing interference information of Embodiment 2 of this disclosure;
FIG. 16 is a schematic diagram of the transmission apparatus of suppressing interference information of Embodiment 3 of this disclosure;
FIG. 17 is a schematic diagram of the transmission apparatus of suppressing interference information of Embodiment 4 of this disclosure;
FIG. 18 is a schematic diagram of the user equipment of Embodiment 5 of this disclosure; and
FIG. 19 is a schematic diagram of the network device of Embodiment 5 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of' or "a type of' in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, and/or other communication protocols that are currently known or will be developed in the future.

In the embodiments of this disclosure, the term "network device", for example, refers to a device in a communication system that accesses a terminal device to the communication network and provides services for the terminal device. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC).

The base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto and a pico). The term "base station" may include some or all of its functions, and each base station may provide communication coverage for a specific geographical area. And a term "cell" may refer to a base station and/or its coverage area, which is dependent on a context of the term.

In the embodiments of this disclosure, the term "user equipment (UE)" or "terminal equipment (TE)" refers to, for example, equipment accessing to a communication network and receiving network services via a network device. The user equipment may be fixed or mobile, and may also be referred to as a mobile station (MS), a terminal, a subscriber station (SS), an access terminal (AT), or a station, etc.

The user equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal.

Scenarios in the embodiments of this disclosure shall be described below by way of examples; however, this disclosure is not limited thereto.

FIG. 3 is a schematic diagram of a communication system of an embodiment of this disclosure, in which a case where a user equipment and a network device are taken as examples is schematically shown. As shown in FIG. 3, a communication system 300 may include a network device 301 and a user equipment 302 (for the sake of simplicity, FIG. 3 shall be described by taking only one user equipment as an example).

In the embodiment of this disclosure, existing traffics or traffics that may be implemented in the future may be performed between the network device 301 and the user equipment 302. For example, such traffics may include but not limited to an enhanced mobile broadband (eMBB), massive machine type communication (MTC), and ultra-reliable and low-latency communication (URLLC). Dynamic TDD may be adopted between the network device 301 and the user equipment 302 for uplink and downlink data transmission.

The embodiments of this disclosure shall be described below in detail by taking a gNB and a UE as an example.

### Embodiment 1

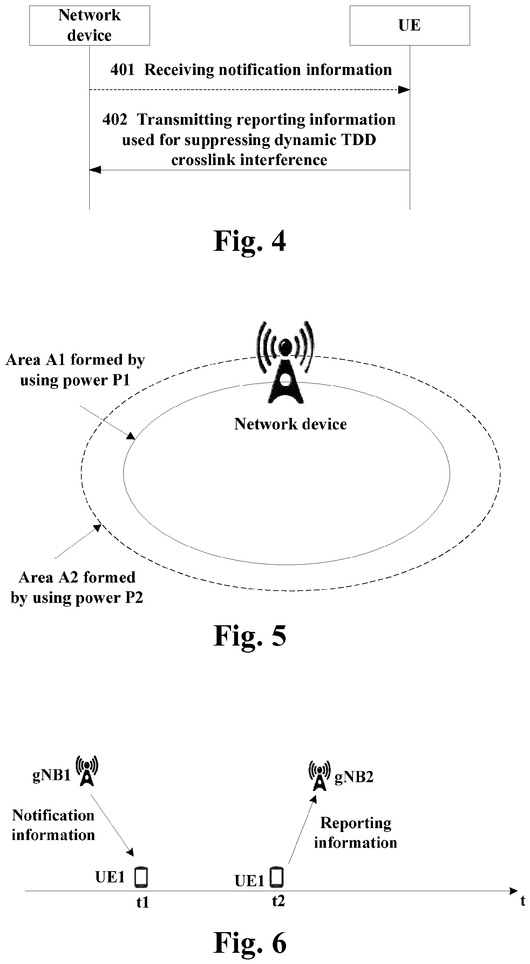

These embodiments of this disclosure provide a transmission method of suppressing interference information, applicable to a user equipment performing dynamic TDD. FIG. 4 is a schematic diagram of the transmission method of suppressing interference information of the embodiment of this disclosure. As shown in FIG. 4, the transmission method includes:
Step 402: the user equipment transmits reporting information used for suppressing dynamic TDD crosslink interference to a serving network device or one or more neighboring network devices;
the reporting information includes one or more pieces of the following information:
   information on a transmission direction of a serving cell within a specific time range,
   information on a transmission direction/transmission directions of one or more neighboring cells within a specific time range,
   indication information indicating whether the user equipment has measured crosslink interference from one or more neighboring cells before transmitting the reporting information,
   indication information indicating whether the user equipment generates crosslink interference to one or more user equipments of one or more neighboring cells before transmitting the reporting information,
   information on a result of measurement of crosslink interference from one or more neighboring cells, information on a position of a resource of the user equipment subjected to crosslink interference or posing crosslink interference to one or more other user equipments before transmitting the reporting information, and
   information on a position of a resource of the user equipment possibly subjected to crosslink interference or posing crosslink interference to one or more other user equipments after transmitting the reporting information.

It should be noted that some particular information of the reporting information (i.e. information for suppressing crosslink interference) is only illustrated above. However, this disclosure is not limited thereto; for example, other information that may be used for suppressing crosslink interference may also be included.

In an embodiment, the specific time range may be a time period for data transmission, and may include, for example, any one of the following: one or more slots, one or more subframes, one or more frames, and one or more symbols. However, this disclosure is not limited thereto, and it may also be a time period denoted by other time units.

In an embodiment, time-frequency resources used by the user equipment for transmitting the reporting information may be configured by the serving network device or the one or more neighboring network devices. And furthermore, the user equipment may transmit the reporting information according to the information on transmission power and/or the information on a time in notification information (details of which are as described later).

For example, each gNB may configure one or more time-frequency resources that are orthogonal to neighboring gNBs to enable serving user equipments in the respective cells to transmit the reporting information (also referred to as reporting signaling). Furthermore, each gNB may also exchange information on configuration of the time-frequency resource with the neighbor gNBs, and may negotiate the configuration of the time-frequency resource with the neighbor gNBs.

The user equipment may transmit the reporting signaling according to transmission power indicated in the notification information (also referred to as notification signaling) transmitted by the serving gNB. However, this disclosure is not limited thereto. For example, a magnitude of the transmission power may also be notified to the user equipment by the serving gNB via other signaling, such as radio resource control (RRC) signaling, or media access control (MAC) layer control signaling.

Furthermore, the user equipment may transmit the reporting signaling according to the time information (such as timing advance information) indicated in the notification signaling transmitted by the serving gNB. However, this disclosure is not limited thereto. For example, the time information may also be transmitted by other signaling, such as RRC signaling, MAC layer control signaling.

In an embodiment, the user equipment transmitting the reporting information may be configured, that is, which user equipment may be limited to transmit the reporting information.

For example, the user equipment transmitting the reporting information may satisfy one or more of the following conditions that:
the user equipment is configured by the serving network device as needing to transmit the reporting information;
the user equipment is scheduled by the serving network device to perform data transmission or reception after transmitting the reporting information;
the user equipment receives the notification information transmitted by the one or more neighboring network devices;
the user equipment discovers that a transmission direction of the serving network device and one or more transmission directions of the one or more neighboring network devices are different;
the user equipment has measured crosslink interference from one or more neighboring cells, or detected that it poses crosslink interference to one or more user equipments of one or more neighboring cells, before transmitting the reporting information; and
the user equipment predicts that it will be subjected to crosslink interference from one or more neighboring cells or pose crosslink interference to one or more user equipments of one or more neighboring cells after transmitting the reporting information.

It is to be noted that some particular conditions are only illustrated above. However, this disclosure is not limited thereto; for example, other conditions may also be included.

The reporting information of this disclosure is described above. Therefore, by reporting the information for suppressing crosslink interference by the user equipment to the serving network device or the one or more neighboring network devices, the information may be punctually notified to the one or more neighboring network devices.

In an embodiment, before transmitting the reporting information, the user equipment may receive the notification information transmitted by a network device.

As shown in FIG. 4, the transmission method may further include:
Step 401: the user equipment receives the notification information from the serving network device or the one or more neighboring network devices;
the notification information may include one or more pieces of the following information: information on a transmission direction of the serving cell within a specific time range, information on a transmission direction/transmission directions of one or more neighboring cells, information on transmission power for transmitting the reporting information, information on a time for transmitting the reporting information, and information on a user equipment transmitting the reporting information; however, this disclosure is not limited thereto.

In an embodiment, the specific time range may be a time period for data transmission, which may include, for example, any one of the following: one or more slots, one or more subframes, one or more frames, and one or more symbols; however, this disclosure is not limited thereto, and it may also be a time period denoted by other time units.

In an embodiment, one or more time-frequency resources used by the user equipment for receiving the notification information may be configured by the serving network device or the one or more neighboring network devices. And furthermore, the user equipment may transmit the reporting information according to information on transmission power and/or information on a time in the notification information.

For example, each gNB may configure one or more time-frequency resources orthogonal to the neighboring gNBs for transmitting the notification information (also referred to as notification signaling). And furthermore, each gNB may exchange information on configuration of the time-frequency resource with the neighboring gNBs, and negotiate with the neighboring gNBs for the configuration of the time-frequency resource.

In an embodiment, the notification information may be transmitted by the serving network device or the one or more neighboring network devices by using power greater than other signal power.

FIG. 5 is a schematic diagram of transmitting the notification information by the network device of the embodiment of this disclosure. As shown in FIG. 5, in comparison with power P1 (forming a signal receiving area A1 shown in FIG. 5) adopted by the network device in transmitting other signals (such as a downlink control signal, downlink data), the network device may transmit the notification information at larger power P2 (forming a signal receiving area A2 shown in FIG. 5). And furthermore, the network device may configure the user equipment with a magnitude of power P2 or a difference ΔP between P2 and P1.

Therefore, more user equipments (including the user equipments of the local cell and the user equipments of the neighboring cells) may be enabled to receive the notification information, so that more user equipments may transmit the reporting information to the serving network device or the neighboring network devices according to the notification information, thereby improving a reliability of information transmission.

It is to be noted that FIG. 4 only illustrates this disclosure; however, this disclosure is not limited thereto. For example, the network device transmitting the notification information in step 401 may not be the same network device as that receiving the reporting information in step 402; and of course, they may be the same network device.

For example, it may be that the serving network device of the user equipment transmits the notification information and the neighboring network device of the user equipment receive the reporting information, or, the neighboring network device of the user equipment transmit the notification information and the serving network device of the user equipment receives the reporting information, or the serving network device of the user equipment transmits the notification information, and all the serving network device and the neighboring network device of the user equipment receive the reporting information, or the neighboring network device of the user equipment transmit the notification information, and all the serving network device and the neighboring network device of the user equipment receive the reporting information. And for the sake of simplicity, they are not differentiated in FIG. 4.

The embodiment of this disclosure shall be further described below by way of two examples.

FIG. 6 is an exemplary diagram of an information transmission method of the embodiment of this disclosure. As shown in FIG. 6, gNB1 is a serving network device of UE1, and gNB2 is a neighboring network device of UE1. gNB1 transmits notification information at time t1, indicating, for example, uplink and downlink transmission directions of gNB1 (or a corresponding cell) within a period of time; UE1 receives the notification information at time t1, and may transmit reporting information to gNB2 at time t2, the reporting information indicating, for example, uplink and downlink transmission directions of gNB1 (or the corresponding cell) within a period of time.

Thus, gNB2 may punctually obtain information (from gNB1, for example) for suppressing crosslink interference via UE1 of the neighboring cell (corresponding to gNB1).

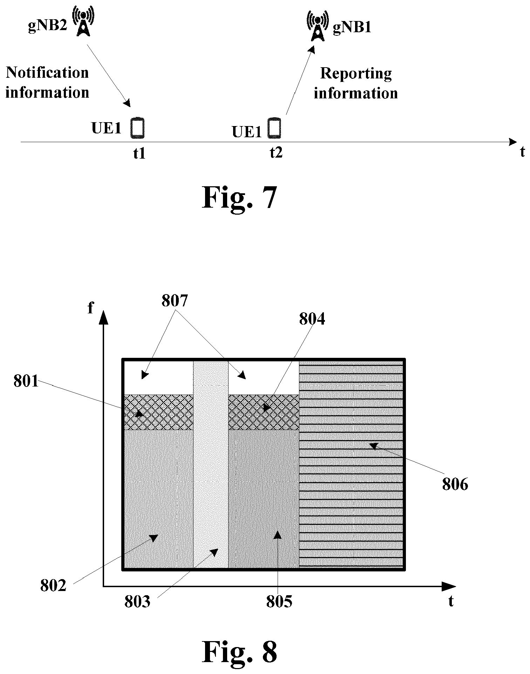

FIG. 7 is another exemplary diagram of an information transmission method of the embodiment of this disclosure. As shown in FIG. 7, gNB1 is a serving network device of UE1, and gNB2 is a neighboring network device of UE1. gNB2 transmits notification information at time t1, indicating, for example, uplink and downlink transmission directions of gNB2 (or a corresponding cell) within a period of time; UE1 receives the notification information at time t1, and may transmit reporting information to gNB2 at time t2, the reporting information indicating, for example, uplink and downlink transmission directions of gNB2 (or the corresponding cell) within a period of time.

Thus, gNB1 may punctually obtain information (from gNB2, for example) for suppressing crosslink interference via UE1 of the local cell (corresponding to gNB1).

The reporting information and the notification information are schematically described above. A time unit structure carrying the report information and the notification information shall be described below. Following description shall be given by taking that the time unit is a slot as an example. However, this disclosure is not limited thereto; for example, the time unit may also be a subframe, or a frame, or another time unit.

In one embodiment, the reporting information and the notification information may be carried in a time unit structure containing downlink data, in a time domain, the time unit structure sequentially carrying the notification information, the reporting information and the downlink data.

FIG. 8 is a schematic diagram of the time unit structure of the embodiment of this disclosure. As shown in FIG. 8, the time unit structure may carry notification signalling 801, other downlink control signaling 802, a gap 803, reporting signalling 804, other uplink control signaling 805, a data area 806 (including downlink data + optional downlink control signaling), and a blank area 807.

Alternatively, the reporting information and the notification information may be carried in a time unit structure containing uplink data, in a time domain, the time unit structure sequentially carrying the notification information, the reporting information and the uplink data.

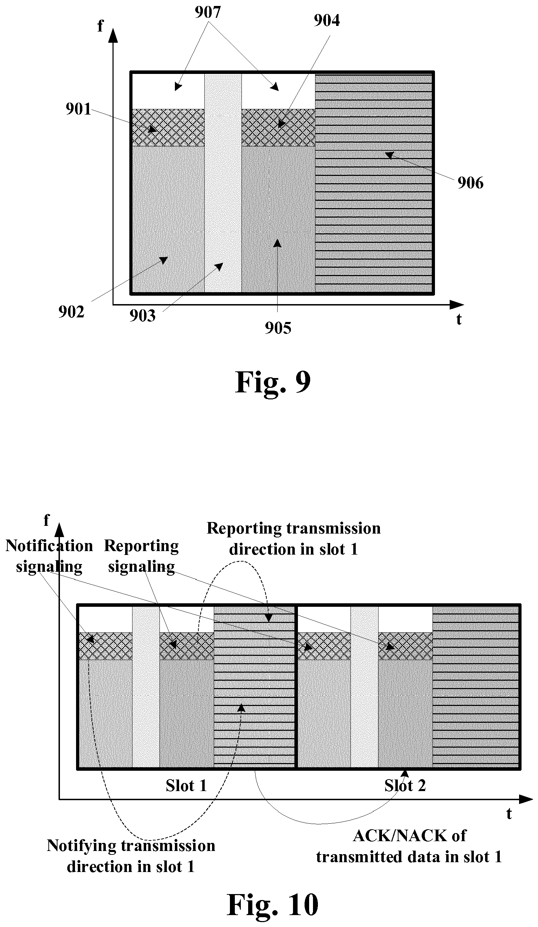

FIG. 9 is another schematic diagram of the time unit structure of the embodiment of this disclosure. As shown in FIG. 9, the time unit structure may carry notification signalling 901, other downlink control signaling 902, a gap 903, reporting signalling 904, other uplink control signaling 905, a data area 906 (including uplink data + optional downlink control signaling), and a blank area 907.

In an embodiment, the time unit structures shown in FIG. 8 and FIG. 9 may be referred to as format 1. In format 1, the notification information, the reporting information and the data (uplink data or downlink data) are sequentially carried in the time domain.

The notification signaling 801 or 901 may be as described above; for example, the indicated transmission direction is a transmission direction of data within a local time unit (such as a slot), or a data transmission direction/data transmission directions of one or more time units after the local time unit (such as a slot).

The reporting signaling 804 or 904 may also be as described above. For example, the reported transmission direction is a transmission direction of a local cell (i.e. the serving cell of the user equipment) or a neighboring cell within the local time unit (such as a slot), or a data transmission direction/data transmission directions of a local cell or a neighboring cell within one or more time units (such as a slot/slots) after the local time unit (such as a slot).

Furthermore, the other downlink control signaling 802 or 902 may be downlink control signaling (such as resource allocation, ACK/NACK of uplink data of previous slots) similar to a physical downlink control channel (PDCCH).

For other uplink control signaling 805 or 905, for example, ACK/NACK of the downlink data of the previous time slots, a channel quality indicator (CQI), a measurement result of crosslink interference, and the like, may be included, and one or more of them may be included. In addition, if there exists no uplink control signaling needing to be transmitted, one or more resources for transmitting the other uplink control signaling may be used to transmit data.

For another example, the measurement result of the crosslink interference reported by the user equipment needs to meet at least one of the following conditions or a combination of thereof that: the user equipment discovers that a transmission direction of its serving network device and one or more transmission directions of the one or more neighboring network devices are different; the user equipment has measured that it is subjected to crosslink interference or detects that it will pose crosslink interference to one or more user equipments of the neighboring cells, before transmitting the other uplink control signaling; the user equipment predicts that it will pose crosslink interference to the one or more user equipments of the neighboring cells in transmitting data after transmitting the above other uplink control signaling, or it will be subjected to crosslink interference from the one or more user equipments of the neighboring cells in receiving data; and the user equipment is scheduled by the serving gNB to perform data transmission or reception. However, this disclosure is not limited thereto; for example, other conditions may be included.

For the data area 806, downlink data may be included; optionally, downlink control signaling may further be included. The user equipment may receive the downlink data according to the foregoing downlink control signaling 802. And if the gNB discovers crosslink interference according to the report of the user equipment and measurement of its own, scheduling of data transmission of the user equipment may be adjusted by transmitting downlink control signaling in the data area 806.

For the data area 906, uplink data may be included; optionally, downlink control signaling may further be included. The user equipment may transmit the uplink data according to the foregoing downlink control signaling 802. And if the gNB discovers crosslink interference according to the report of the user equipment and measurement of its own, scheduling of data transmission of the user equipment may be adjusted by transmitting downlink control signaling in the data area 906.

In the blank area 807 or 907, the gNB or the user equipment does not transmit any information, aiming to reduce interference to the neighboring cells. However, this disclosure is not limited thereto; for example, there may be no blank area.

It should be noted that positions of the above time-frequency resources for transmitting the information are examples only. And in a practical system, the information may be transmitted according to configuration of the gNB.

FIG. 10 is a schematic diagram of multiple time units adopting format 1 of the embodiment of this disclosure, taking that two time units are two slots as an example. As shown in FIG. 10, the notification signaling in slot 1 may indicate the transmission direction of the serving cell of slot 1, the reporting signaling in slot 1 may report the transmission direction of the serving cell of slot 1 or the transmission directions of the neighboring cells of slot 1, and a transmission result (ACK/NACK) of the downlink data in slot 1 may be indicated in the uplink control signaling in slot 2.

In another embodiment, the reporting information and the notification information may be carried in a time unit structure containing downlink data, in the time domain, the time unit structure sequentially carrying the notification information, the downlink data and the reporting information.

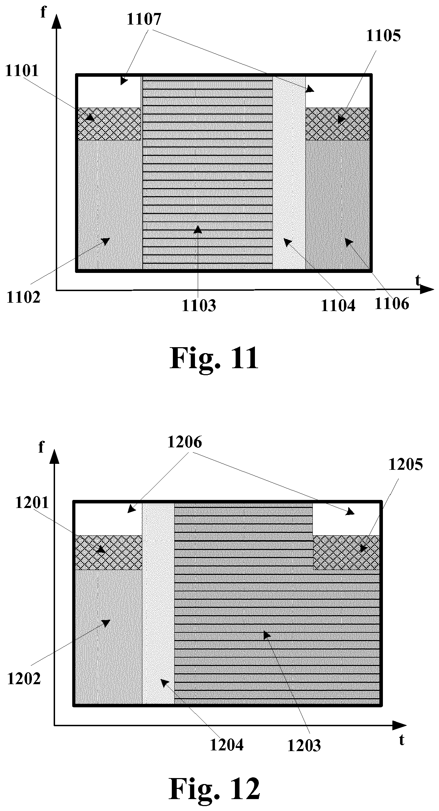

FIG. 11 is a further schematic diagram of the time unit structure of the embodiment of this disclosure. As shown in FIG. 11, the time unit structure may carry notification signalling 1101, other downlink control signaling 1102, a data area 1103 (including downlink data), a gap 1104, reporting signalling 1105, other uplink control signaling 1106, and a blank area 1107.

Or, the reporting information and the notification information may be carried in a time unit structure containing uplink data, in the time domain, the time unit structure sequentially carrying the notification information, the uplink data and the reporting information.

FIG. 12 is yet another schematic diagram of the time unit structure of the embodiment of this disclosure. As shown in FIG. 12, the time unit structure may carry notification signalling 1201, other downlink control signaling 1202, a data area 1203 (including uplink data), a gap 1204, reporting signalling 1205, and a blank area 1206.

In an embodiment, the time unit structures shown in FIG. 11 and FIG. 12 may be referred to as format 2. In format 2, the notification information, the data (uplink data or downlink data) and the reporting information are sequentially carried in the time domain.

The notification signaling 1101 or 1201 may be as described above; for example, the indicated transmission direction is a transmission direction of a data transmission direction/data transmission directions of one or more time units (such as a slot/slots) after the local time unit (such as a slot).

The reporting signaling 1105 or 1205 may also be as described above. For example, the reported transmission direction is a data transmission direction/data transmission directions of a local cell (i.e. the serving cell of the user equipment) or a neighboring cell within one or more time units (such as a slot/slots) after the local time unit (such as a slot).

Furthermore, the other downlink control signaling 1102 or 1202 may be downlink control signaling (such as resource allocation, ACK/NACK of uplink data of previous slots) similar to a physical downlink control channel (PDCCH).

For the other uplink control signaling 1106, for example, ACK/NACK of the downlink data of the previous slots, a channel quality indicator (CQI), a measurement result of crosslink interference, and the like, may be included, and one or more of them may be included.

For another example, the measurement result of the crosslink interference reported by the user equipment needs to meet at least one of the following conditions or a combination of thereof that: the user equipment discovers that a transmission direction of its serving network device of one or more time units (such as a slot/slots) after the local time unit (such as a slot) and one or more transmission directions of the neighboring network devices are different; the user equipment has measured that it is subjected to crosslink interference or detects that it will pose crosslink interference before transmitting the other uplink control signaling; the user equipment predicts that it will pose crosslink interference to the one or more user equipments of the neighboring cells in transmitting data after transmitting the above uplink control signaling, or it will be subjected to crosslink interference from the one or more user equipments of the neighboring cells in receiving data; and the user equipment is scheduled by the serving gNB to perform data transmission or reception at one or more time units (such as a slot/slots) after the local time unit (such as a slot). However, this disclosure is not limited thereto; for example, other conditions may be included.

In the blank area 1107 or 1207, the gNB or the user equipment does not transmit any information, aiming to reduce interference to the neighboring cells. However, this disclosure is not limited thereto; for example, there may be no blank area.

It should be noted that positions of the above time-frequency resources for transmitting the information are examples only. And in a practical system, the information may be transmitted according to configuration of the gNB.

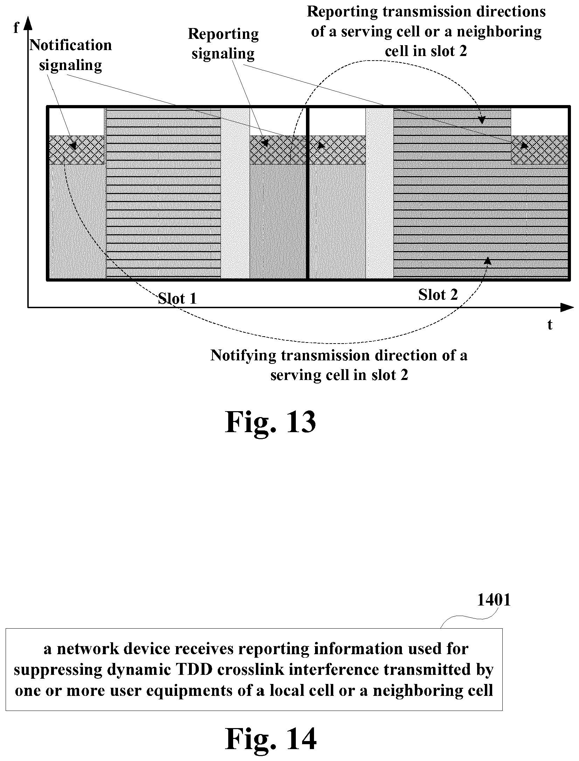

FIG. 13 is a schematic diagram of multiple time units adopting format 2 of the embodiment of this disclosure, taking that two time units are two slots as an example. As shown in FIG. 13, the notification signaling in slot 1 may indicate the transmission direction of the serving cell of slot 2, the reporting signaling in slot 1 may report the transmission direction of the serving cell of slot 2 or the transmission directions of the neighboring cells of slot 2.

It should be noted that above format 1 or format 2 is adopted only when the gNB uses the dynamic TDD to serve for the user equipments within its cell, and the notification signaling and the reporting signaling are transmitted only after the gNB uses the dynamic TDD to serve for the user equipments within its cell; however, this disclosure is not limited thereto.

It can be seen from the above embodiments that by reporting information used for suppressing interference by the user equipment to the serving network device or one or more neighboring network devices, the information may be punctually notified to the one or more neighboring network devices, thereby efficiently suppressing crosslink interference of a dynamic TDD system.

### Embodiment 2

These embodiments of this disclosure provide a transmission method of suppressing interference information, applicable to a network device performing dynamic TDD, with contents in these embodiments identical to those in Embodiment 1 being not going to be described herein any further.

FIG. 14 is a schematic diagram of the transmission method of suppressing interference information of the embodiment of this disclosure. As shown in FIG. 14, the transmission method includes:
Step 1401: the network device receives reporting information used for suppressing dynamic time division duplex crosslink interference transmitted by one or more user equipments of a local cell or a neighboring cell;
the reporting information includes one or more pieces of the following information:
   information on a transmission direction of a serving cell of the user equipment within a specific time range,
   information on a transmission direction/transmission directions of one or more neighboring cells of the user equipment within a specific time range,
   indication information indicating whether the user equipment has measured crosslink interference from one or more neighboring cells before transmitting the reporting information,
   indication information indicating whether the user equipment generates crosslink interference to one or more user equipments of one or more neighboring cells before transmitting the reporting information,
   information on a result of measurement of crosslink interference from one or more neighboring cells,
   information on a position of a resource of the user equipment subjected to crosslink interference or posing crosslink interference to one or more other user equipments before transmitting the reporting information, and
   information on a position of a resource of the user equipment possibly subjected to crosslink interference or posing crosslink interference to one or more other user equipments after transmitting the reporting information.

In an embodiment, the specific time range may be a time period for data transmission, and may include, for example, any one of the following: one or more slots, one or more subframes, one or more frames, and one or more symbols. However, this disclosure is not limited thereto, and it may also be a time period denoted by other time units.

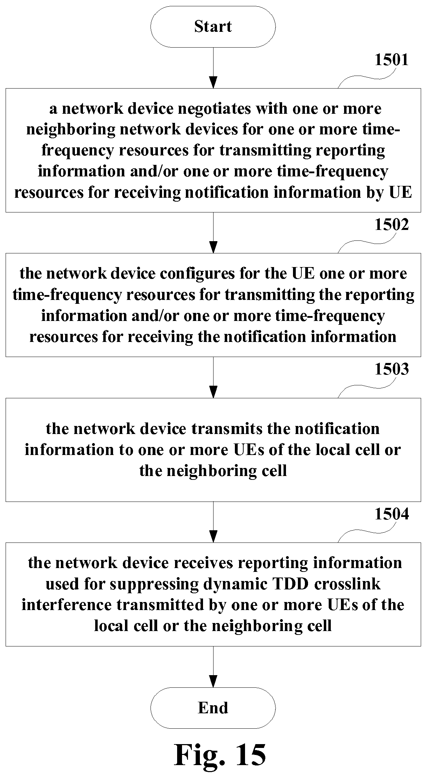

FIG. 15 is another schematic diagram of the transmission method of suppressing interference information of the embodiment of this disclosure. As shown in FIG. 15, the transmission method includes:
Step 1501: the network device negotiates with one or more neighboring network devices for one or more time-frequency resources for transmitting the reporting information and/or one or more time-frequency resources for receiving the notification information by the user equipment.
Step 1502: the network device configures for the user equipment one or more time-frequency resources for transmitting the reporting information and/or one or more time-frequency resources for receiving the notification information.
Step 1503: the network device transmits notification information to one or more user equipments of a local cell or a neighboring cell;
the notification information includes one or more pieces of the following information:
   information on a transmission direction of the local cell within a specific time range, information on transmission power of the user equipment for transmitting the reporting information, information on a time of the user equipment for transmitting the reporting information, and information on a user equipment transmitting the reporting information; however, this disclosure is not limited thereto.

Step 1504: the network device receives reporting information used for suppressing dynamic TDD crosslink interference transmitted by one or more user equipments of the local cell or the neighboring cell.
the reporting information may include one or more pieces of the following information:
information on a transmission direction of a serving cell of the user equipment within a specific time range, information on a transmission direction/transmission directions of one or more neighboring cells of the user equipment within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information; however, this disclosure is not limited thereto.

It should be noted that the embodiments of this disclosure are only illustrated in FIG. 15; however, this disclosure is not limited thereto. For example, an order of execution of the steps may be appropriately adjusted; and furthermore, some other steps may be added, or some of these steps may be reduced. And appropriate variants may be made by those skilled in the art according to what is described above, without being limited to the disclosure contained in FIG. 15.

In one embodiment, the reporting information and the notification information may be carried in a time unit structure containing downlink data, in a time domain, the time unit structure sequentially carrying the notification information, the reporting information and the downlink data;
or the reporting information and the notification information are carried in a time unit structure containing uplink data, in a time domain, the time unit structure sequentially carrying the notification information, the reporting information and the uplink data.

The information on a transmission direction in the notification information indicates a data transmission direction in a local time unit or a data transmission direction/data transmission directions in one or more time units after the local time unit;
and the information on a transmission direction in the reporting information indicates a data transmission direction/data transmission directions of the serving cell or the neighboring cells in a local time unit or a data transmission direction/data transmission directions of the serving cell or the neighboring cells in one or more time units after the local time unit.

In another embodiment, the reporting information and the notification information may be carried in a time unit structure containing downlink data, in a time domain, the time unit structure sequentially carrying the notification information, the downlink data and the reporting information;
or the reporting information and the notification information are carried in a time unit structure containing uplink data, in a time domain, the time unit structure sequentially carrying the notification information, the uplink data and the reporting information.

The information on a transmission direction in the notification information indicates a data transmission direction/data transmission directions in one or more time units after the local time unit;
and the information on a transmission direction in the reporting information indicates a data transmission direction/data transmission directions of the serving cell or the neighboring cells in one or more time units after the local time unit.

It can be seen from the above embodiments that by reporting information used for suppressing interference by the user equipment to the serving network device or one or more neighboring network devices, the information may be punctually notified to the one or more neighboring network devices, thereby efficiently suppressing crosslink interference of a dynamic TDD system.

### Embodiment 3

These embodiments of this disclosure provide a transmission apparatus of suppressing interference information, which may be, for example, a user equipment performing dynamic TDD, or may be one or more parts or components configured in a user equipment. And contents in these embodiments identical to those in Embodiment 1 shall not be described herein any further.

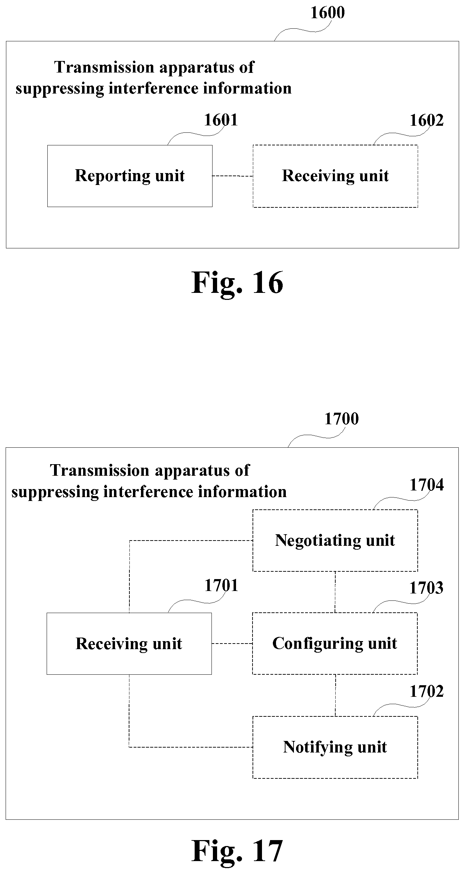

FIG. 16 is a schematic diagram of the transmission apparatus of suppressing interference information of the embodiment of this disclosure. As shown in FIG. 16, a transmission apparatus 1600 of suppressing interference information includes:
a reporting unit 1601 configured to transmit reporting information used for suppressing dynamic time division duplex crosslink interference to a serving network device or one or more neighboring network devices;
the reporting information may include one or more pieces of the following information:
   information on a transmission direction of a serving cell within a specific time range, information on a transmission direction/transmission directions of one or more neighboring cells within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information; however, this disclosure is not limited thereto.

As shown in FIG. 16, the transmission apparatus 1600 of suppressing interference information may further include:
a receiving unit 1602 configured to receive notification information from the serving network device or the one or more neighboring network devices;
the notification information may include one or more pieces of the following information:
   information on a transmission direction of the serving cell within a specific time range, information on a transmission direction/transmission directions of one or more neighboring cells, information on transmission power for transmitting the reporting information, information on a time for transmitting the reporting information, and information on a user equipment transmitting the reporting information.

In an embodiment, the specific time range may be a time period for data transmission, which may include, for example, any one of the following: one or more slots, one or more subframes, one or more frames, and one or more symbols; however, this disclosure is not limited thereto.

In an embodiment, one or more time-frequency resources used by the reporting unit 1601 for transmitting the reporting information may be configured by the serving network device or the one or more neighboring network devices, and/or, one or more time-frequency resources used by the receiving unit 1602 for receiving the notification information may be configured by the serving network device or the one or more neighboring network devices.

In an embodiment, the reporting unit 1601 may transmit the reporting information according to the information on transmission power and/or the information on a time in the notification information; and/or, the notification information may be transmitted by the serving network device or the one or more neighboring network devices by using power greater than other signal power.

In an embodiment, the user equipment transmitting the reporting information may satisfy one or more of the following conditions that:
the user equipment is configured by the serving network device as needing to transmit the reporting information;
the user equipment is scheduled by the serving network device to perform data transmission or reception after transmitting the reporting information;
the user equipment receives the notification information transmitted by the one or more neighboring network devices;
the user equipment discovers that a transmission direction of the serving network device and one or more transmission directions of the one or more neighboring network devices are different;
the user equipment has measured crosslink interference from one or more neighboring cells, or detected that it poses crosslink interference to one or more user equipments of one or more neighboring cells, before transmitting the reporting information; and
the user equipment predicts that it will be subjected to crosslink interference from one or more neighboring cells or pose crosslink interference to one or more user equipments of one or more neighboring cells after transmitting the reporting information.

In one embodiment, the reporting information and the notification information are carried in a time unit structure containing downlink data, in a time domain, the time unit structure sequentially carrying the notification information, the reporting information and the downlink data;
or the reporting information and the notification information are carried in a time unit structure containing uplink data, in a time domain, the time unit structure sequentially carrying the notification information, the reporting information and the uplink data.

The information on a transmission direction in the notification information indicates a data transmission direction in a local time unit or a data transmission direction/data transmission directions in one or more time units after the local time unit;
and the information on a transmission direction in the reporting information indicates a data transmission direction/data transmission directions of the serving cell or the one or more neighboring cells in a local time unit or a data transmission direction/data transmission directions of the serving cell or the one or more neighboring cells in one or more time units after the local time unit.

In an embodiment, the time unit structure may further carry downlink control information after the reporting information, the downlink control information being transmitted by the serving network device or the one or more neighboring network devices in a case where crosslink interference is discovered, so as to adjust scheduling of a user equipment for transmitting data.

In another embodiment, the reporting information and the notification information are carried in a time unit structure containing downlink data, in a time domain, the time unit structure sequentially carrying the notification information, the downlink data and the reporting information;
or the reporting information and the notification information are carried in a time unit structure containing uplink data, in a time domain, the time unit structure sequentially carrying the notification information, the uplink data and the reporting information.

The information on a transmission direction in the notification information indicates a data transmission direction/data transmission directions in one or more time units after a local time unit;
and the information on a transmission direction in the reporting information indicates a data transmission direction/data transmission directions of the serving cell or the one or more neighboring cells in one or more time units after the local time unit.

It should be noted that the components or modules related to this disclosure are only illustrated above; however, this disclosure is not limited thereto. And the transmission apparatus 1600 of suppressing interference information may further include other components or modules, and reference may be made to related techniques for particular contents of these components or modules.

It can be seen from the above embodiments that by reporting information used for suppressing interference by the user equipment to the serving network device or one or more neighboring network devices, the information may be punctually notified to the one or more neighboring network devices, thereby efficiently suppressing crosslink interference of a dynamic TDD system.

### Embodiment 4

These embodiments of this disclosure provide a transmission apparatus of suppressing interference information, which may be, for example, a network device performing dynamic TDD, or may be one or more parts or components configured in a network device. And contents in these embodiments identical to those in embodiments 1 and 2 shall not be described herein any further.

FIG. 17 is a schematic diagram of the transmission apparatus of suppressing interference information of the embodiment of this disclosure. As shown in FIG. 17, a transmission apparatus 1700 of suppressing interference information includes:
a receiving unit 1701 configured to receive reporting information used for suppressing dynamic time division duplex crosslink interference transmitted by one or more user equipments of a local cell or a neighboring cell;
the reporting information may include one or more pieces of the following information:
   information on a transmission direction of a serving cell of the user equipment within a specific time range, information on a transmission direction/transmission directions of one or more neighboring cells of the user equipment within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

As shown in FIG. 17, the transmission apparatus 1700 of suppressing interference information may further include:
a notifying unit 1702 configured to transmit notification information to one or more user equipments of the local cell or the neighboring cell;
the notification information includes one or more pieces of the following information: information on a transmission direction of the local cell within a specific time range, information on transmission power of the user equipment for transmitting the reporting information, information on a time of the user equipment for transmitting the reporting information, and information on a user equipment transmitting the reporting information.

As shown in FIG. 17, the transmission apparatus 1700 of suppressing interference information may further include:
a configuring unit 1703 configured to configure the user equipment with one or more time-frequency resources for transmitting the reporting information and/or one or more time-frequency resources for receiving the notification information.

As shown in FIG. 17, the transmission apparatus 1700 of suppressing interference information may further include:
a negotiating unit 1704 configured to negotiate with one or more neighboring network devices for the one or more time-frequency resources for transmitting the reporting information and/or the one or more time-frequency resources for receiving the notification information by the user equipment.

In one embodiment, the reporting information and the notification information may be carried in a time unit structure containing downlink data, in a time domain, the time unit structure sequentially carrying the notification information, the reporting information and the downlink data;
or the reporting information and the notification information may be carried in a time unit structure containing uplink data, in a time domain, the time unit structure sequentially carrying the notification information, the reporting information and the uplink data.

The information on a transmission direction in the notification information indicates a data transmission direction in a local time unit or a data transmission direction/data transmission directions in one or more time units after the local time unit;
and the information on a transmission direction in the reporting information indicates a data transmission direction/data transmission directions of the serving cell or the one or more neighboring cells in a local time unit or a data transmission direction/data transmission directions of the serving cell or the one or more neighboring cells in one or more time units after the local time unit.

In another embodiment, the reporting information and the notification information may be carried in a time unit structure containing downlink data, in a time domain, the time unit structure sequentially carrying the notification information, the downlink data and the reporting information;
or the reporting information and the notification information are carried in a time unit structure containing uplink data, in a time domain, the time unit structure sequentially carrying the notification information, the uplink data and the reporting information.

The information on a transmission direction in the notification information indicates a data transmission direction/data transmission directions in one or more time units after the local time unit;
and the information on a transmission direction in the reporting information indicates a data transmission direction/data transmission directions of the serving cell or the one or more neighboring cells in one or more time units after the local time unit.

It should be noted that the components or modules related to this disclosure are only illustrated above; however, this disclosure is not limited thereto. And the transmission apparatus 1700 of suppressing interference information may further include other components or modules, and reference may be made to related techniques for particular contents of these components or modules.

It can be seen from the above embodiments that by reporting information used for suppressing interference by the user equipment to the serving network device or one or more neighboring network devices, the information may be punctually notified to the one or more neighboring network devices, thereby efficiently suppressing crosslink interference of a dynamic TDD system.

### Embodiment 5

These embodiments of this disclosure provide a communication system, reference being able to be made to FIG. 3, and contents identical to those in embodiments 1-4 being not going to be described herein any further. In an embodiment, the communication system 300 may include:
a user equipment 302 configured with the transmission apparatus 1600 of suppressing interference information as described in Embodiment 3; and
a network device 301 configured with the transmission apparatus 1700 of suppressing interference information as described in Embodiment 4.

The embodiment of this disclosure further provides a user equipment; however, this disclosure is not limited thereto, and may also be other devices.

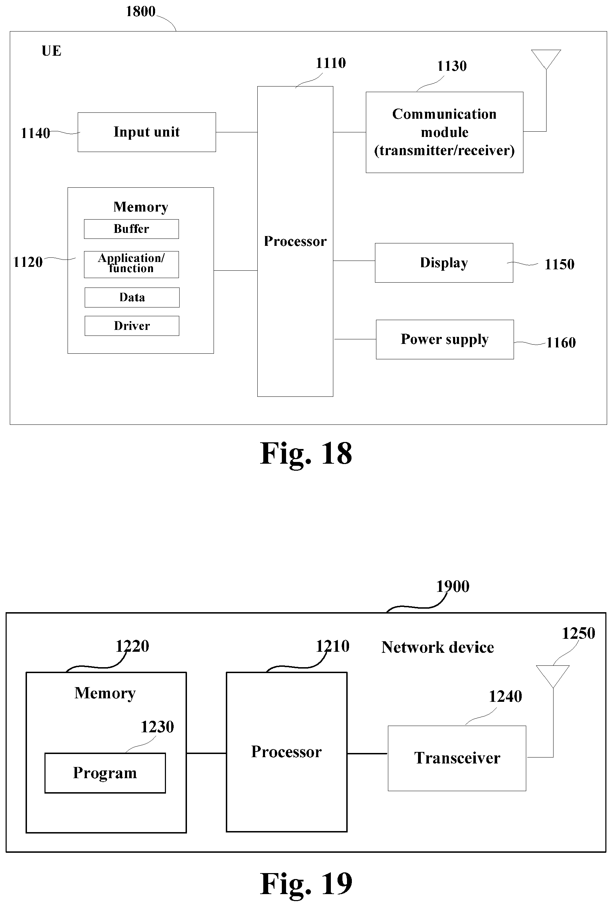

FIG. 18 is a schematic diagram of the user equipment of the embodiment of this disclosure. As shown in FIG. 18, a user equipment 1800 may include a processor 1110 and a memory 1120, the memory 1120 storing data and programs and being coupled to the processor 1110. It should be noted that this figure is illustrative only, and other types of structures may also be used, so as to supplement or replace this structure and achieve a telecommunications function or other functions.

The processor 1110 may be configured to execute the functions of the transmission apparatus 1600 of suppressing interference information. For example, the processor 1110 may be configured to perform the following control: transmitting reporting information used for suppressing dynamic time division duplex crosslink interference by the user equipment to a serving network device or one or more neighboring network devices;
the reporting information includes one or more pieces of the following information:
information on a transmission direction of a serving cell within a specific time range, information on a transmission direction/transmission directions of one or more neighboring cells within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

As shown in FIG. 18, the user equipment 1800 may further include a communication module 1130, an input unit 1140, a display 1150 and a power supply 1160. Functions of the above components are similar to those in the relevant art, and shall not be described herein any further. It should be noted that the user equipment 1800 does not necessarily include all the parts shown in FIG. 18, and the above components are not necessary; and furthermore, the user equipment 1800 may include parts not shown in FIG. 18, and the relevant art may be referred to.

The embodiment of this disclosure further provides a network device, such as a base station; however, this disclosure is not limited thereto, and may also be other network devices.

FIG. 19 is a schematic diagram of a structure of the network device of the embodiment of this disclosure. As shown in FIG. 19, a network device 1900 may include a processor 1210 (such as a central processing unit (CPU)) and a memory 1220, the memory 1220 being coupled to the processor 1210. The memory 1920 may store various data, and furthermore, it may store a program 1230 for data processing, and execute the program 1230 under control of the processor 1210.

The processor 1210 may be configured to execute the functions of the transmission apparatus 1700 of suppressing interference information. For example, the processor 1210 may be configured to execute the program 1230 to perform the following control: receiving reporting information used for suppressing dynamic time division duplex crosslink interference transmitted by one or more user equipments of a local cell or a neighboring cell;
the reporting information includes one or more pieces of the following information:
information on a transmission direction of a serving cell of the user equipment within a specific time range, information on a transmission direction/data transmission directions of one or more neighboring cells of the user equipment within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

Furthermore, as shown in FIG. 19, the network device 1900 may include a transceiver 1240, and an antenna 1250, etc. Functions of the above components are similar to those in the relevant art, and shall not be described herein any further. It should be noted that the network device 1900 does not necessarily include all the parts shown in FIG. 19, and furthermore, the network device 1900 may include parts not shown in FIG. 19, and the relevant art may be referred to.

An embodiment of the present disclosure provides a computer readable program code, which, when executed in a user equipment, may cause the user equipment to carry out the transmission method of suppressing interference information as described in Embodiment 1.

An embodiment of the present disclosure provides a computer storage medium, including a computer readable program code, which may cause a user equipment to carry out the transmission method of suppressing interference information as described in Embodiment 1.

An embodiment of the present disclosure provides a computer readable program code, which, when executed in a network device (such as a base station), may cause the network device (such as a base station) to carry out the transmission method of suppressing interference information as described in Embodiment 2.

An embodiment of the present disclosure provides a computer storage medium, including a computer readable program code, which may a network device (such as a base station) to carry out the transmission method of suppressing interference information as described in Embodiment 2.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory.

The method/apparatus described with reference to the embodiments of this disclosure may be directly embodied as hardware, software modules executed by a processor, or a combination thereof. For example, one or more functional block diagrams and/or one or more combinations of the functional block diagrams shown in FIG. 16 may either correspond to software modules of procedures of a computer program, or correspond to hardware modules. Such software modules may respectively correspond to the steps shown in FIG. 4. And the hardware module, for example, may be carried out by firming the soft modules by using a field programmable gate array (FPGA).

The soft modules may be located in an RAM, a flash memory, an ROM, an EPROM, and an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the accompanying drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the accompanying drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

For implementations of this disclosure containing the above embodiments, following supplements are further disclosed.

Supplement 1. A transmission apparatus of suppressing interference information, the transmission apparatus including:
a receiving unit configured to receive notification information transmitted by a network device; and
a reporting unit configured to transmit reporting information used for suppressing dynamic time division duplex crosslink interference to a serving network device or one or more neighboring network devices;
wherein, the reporting information and the notification information are carried in a time unit structure containing downlink data, in a time domain, the time unit structure sequentially carrying the notification information, the reporting information and the downlink data;
or the reporting information and the notification information are carried in a time unit structure containing uplink data, in a time domain, the time unit structure sequentially carrying the notification information, the reporting information and the uplink data.

Supplement 2. The transmission apparatus according to supplement 1, wherein the reporting information includes one or more pieces of the following information:
information on a transmission direction of a serving cell within a specific time range,
information on a transmission direction/transmission directions of one or more neighboring cells within a specific time range,
indication information indicating whether the user equipment has measured crosslink interference from one or more neighboring cells before transmitting the reporting information,
indication information indicating whether the user equipment generates crosslink interference to one or more user equipments of one or more neighboring cells before transmitting the reporting information,
information on a result of measurement of crosslink interference from one or more neighboring cells,
information on a position of a resource of the user equipment subjected to crosslink interference or posing crosslink interference to one or more other user equipments before transmitting the reporting information, and
information on a position of a resource of the user equipment possibly subjected to crosslink interference or posing crosslink interference to one or more other user equipments after transmitting the reporting information.

Supplement 3. The transmission apparatus according to supplement 1, wherein the notification information includes one or more pieces of the following information:
information on a transmission direction of the serving cell within a specific time range,
information on a transmission direction/transmission directions of one or more neighboring cells,
information on transmission power for transmitting the reporting information,
information on a time for transmitting the reporting information, and
information on a user equipment transmitting the reporting information.

Supplement 4. The transmission apparatus according to supplement 2, wherein the specific time range is a time period for data transmission and includes any one of the following: one or more slots, one or more subframes, one or more frames, and one or more symbols.

Supplement 5. The transmission apparatus according to supplement 1, wherein one or more time-frequency resources used by the reporting unit for transmitting the reporting information is/are configured by the serving network device or the one or more neighboring network devices, and/or, one or more time-frequency resources used by the receiving unit for receiving the notification information is/are configured by the serving network device or the one or more neighboring network devices.

Supplement 6. The transmission apparatus according to supplement 1, wherein the reporting unit transmits the reporting information according to the information on transmission power and/or the information on a time in the notification information;
and/or, the notification information is transmitted by the serving network device or the one or more neighboring network devices by using power greater than other signal power.

Supplement 7. The transmission apparatus according to supplement 1, wherein the user equipment transmitting the reporting information satisfies one or more of the following conditions that:
the user equipment is configured by the serving network device as needing to transmit the reporting information;
the user equipment is scheduled by the serving network device to perform data transmission or reception after transmitting the reporting information;
the user equipment receives the notification information transmitted by the one or more neighboring network devices;
the user equipment discovers that a transmission direction of the serving network device and one or more transmission directions of the one or more neighboring network devices are different;
the user equipment has measured crosslink interference from one or more neighboring cells, or detected that it poses crosslink interference to one or more user equipments of one or more neighboring cells, before transmitting the reporting information; and
the user equipment predicts that it will be subjected to crosslink interference from one or more neighboring cells or pose crosslink interference to one or more user equipments of one or more neighboring cells after transmitting the reporting information.

Supplement 8. The transmission apparatus according to supplement 1, wherein the information on a transmission direction in the notification information indicates a data transmission direction in a local time unit or a data transmission direction/data transmission directions in one or more time units after the local time unit;
and the information on a transmission direction in the reporting information indicates a data transmission direction/data transmission directions of the serving cell or the one or more neighboring cells in a local time unit or a data transmission direction/data transmission directions of the serving cell or the one or more neighboring cells in one or more time units after the local time unit.

Supplement 9. The transmission apparatus according to supplement 1, wherein the time unit structure further carries downlink control information after the reporting information, the downlink control information being transmitted by the serving network device or the one or more neighboring network devices in a case where crosslink interference is discovered, so as to adjust scheduling of a user equipment for transmitting data.

Supplement 10. A transmission apparatus of suppressing interference information, the transmission apparatus including:
a receiving unit configured to receive notification information transmitted by a network device; and
a reporting unit configured to transmit reporting information used for suppressing dynamic time division duplex crosslink interference to a serving network device or one or more neighboring network devices;
wherein, the reporting information and the notification information are carried in a time unit structure containing downlink data, in a time domain, the time unit structure sequentially carrying the notification information, the downlink data and the reporting information;
or the reporting information and the notification information are carried in a time unit structure containing uplink data, in a time domain, the time unit structure sequentially carrying the notification information, the uplink data and the reporting information.

Supplement 11. The transmission apparatus according to supplement 10, wherein the information on a transmission direction in the notification information indicates a data transmission direction/data transmission directions in one or more time units after a local time unit;
and the information on a transmission direction in the reporting information indicates a data transmission direction/data transmission directions of the serving cell or the one or more neighboring cells in one or more time units after the local time unit.

Supplement 12. The transmission apparatus according to supplement 10, wherein the reporting information includes one or more pieces of the following information:
information on a transmission direction of a serving cell within a specific time range,
information on a transmission direction/transmission directions of one or more neighboring cells within a specific time range,
indication information indicating whether the user equipment has measured crosslink interference from one or more neighboring cells before transmitting the reporting information,
indication information indicating whether the user equipment generates crosslink interference to one or more user equipments of one or more neighboring cells before transmitting the reporting information,
information on a result of measurement of crosslink interference from one or more neighboring cells,
information on a position of a resource of the user equipment subjected to crosslink interference or posing crosslink interference to one or more other user equipments before transmitting the reporting information, and
information on a position of a resource of the user equipment possibly subjected to crosslink interference or posing crosslink interference to one or more other user equipments after transmitting the reporting information.

Supplement 13. The transmission apparatus according to supplement 10, wherein the notification information includes one or more pieces of the following information:
information on a transmission direction of the serving cell within a specific time range,
information on a transmission direction/transmission directions of one or more neighboring cells,
information on transmission power for transmitting the reporting information,
information on a time for transmitting the reporting information, and
information on a user equipment transmitting the reporting information.

Supplement 14. The transmission apparatus according to supplement 12, wherein the specific time range is a time period for data transmission and includes any one of the following: one or more slots, one or more subframes, one or more frames, and one or more symbols.

Supplement 15. The transmission apparatus according to supplement 10, wherein the one or more time-frequency resources used by the reporting unit for transmitting the reporting information is/are configured by the serving network device or the one or more neighboring network devices, and/or, one or more time-frequency resources used by the receiving unit for receiving the notification information is/are configured by the serving network device or the one or more neighboring network devices.

Supplement 16. The transmission apparatus according to supplement 10, wherein the reporting unit transmits the reporting information according to the information on transmission power and/or the information on a time in the notification information;
and/or, the notification information is transmitted by the serving network device or the one or more neighboring network devices by using power greater than other signal power.

Supplement 17. The transmission apparatus according to supplement 10, wherein the user equipment transmitting the reporting information satisfies one or more of the following conditions that:
the user equipment is configured by the serving network device as needing to transmit the reporting information;
the user equipment is scheduled by the serving network device to perform data transmission or reception after transmitting the reporting information;
the user equipment receives the notification information transmitted by the one or more neighboring network devices;
the user equipment discovers that a transmission direction of the serving network device and one or more transmission directions of the one or more neighboring network devices are different;
the user equipment has measured crosslink interference from one or more neighboring cells, or detected that it poses crosslink interference to one or more user equipments of one or more neighboring cells, before transmitting the reporting information; and
the user equipment predicts that it will be subjected to crosslink interference from one or more neighboring cells or pose crosslink interference to one or more user equipments of one or more neighboring cells after transmitting the reporting information.

## Claims

1. A transmission apparatus of suppressing interference information, configured in a user equipment performing dynamic time division duplex, the transmission apparatus comprising:
a reporting unit configured to transmit reporting information used for suppressing dynamic time division duplex crosslink interference to a serving network device or one or more neighboring network devices;
wherein, the reporting information comprises one or more pieces of the following information:
information on a transmission direction of a serving cell within a specific time range, information on a transmission direction/transmission directions of one or more neighboring cells within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

2. The transmission apparatus according to claim 1, wherein the transmission apparatus further comprises:
a receiving unit configured to receive notification information from the serving network device or the one or more neighboring network devices;
wherein, the notification information comprises one or more pieces of the following information:
information on a transmission direction of the serving cell within a specific time range, information on a transmission direction/transmission directions of one or more neighboring cells, information on transmission power for transmitting the reporting information, information on a time for transmitting the reporting information, and information on a user equipment transmitting the reporting information.

3. The transmission apparatus according to claim 1, wherein the specific time range is a time period for data transmission and comprises any one of the following: one or more slots, one or more subframes, one or more frames, and one or more symbols.

4. The transmission apparatus according to claim 2, wherein one or more time-frequency resources used by the reporting unit for transmitting the reporting information is/are configured by the serving network device or the one or more neighboring network devices, and/or, one or more time-frequency resources used by the receiving unit for receiving the notification information is/are configured by the serving network device or the one or more neighboring network devices.

5. The transmission apparatus according to claim 2, wherein the reporting unit is configured to transmit the reporting information according to the information on transmission power and/or the information on a time in the notification information;
and/or, the notification information is transmitted by the serving network device or the one or more neighboring network devices by using power greater than other signal power.

6. The transmission apparatus according to claim 2, wherein the user equipment transmitting the reporting information satisfies one or more of the following conditions that:
the user equipment is configured by the serving network device as needing to transmit the reporting information;
the user equipment is scheduled by the serving network device to perform data transmission or reception after transmitting the reporting information;
the user equipment receives the notification information transmitted by the one or more neighboring network devices;
the user equipment discovers that a transmission direction of the serving network device and one or more transmission directions of the one or more neighboring network devices are different;
the user equipment has measured crosslink interference from one or more neighboring cells, or detected that it poses crosslink interference to one or more user equipments of one or more neighboring cells, before transmitting the reporting information; and
the user equipment predicts that it will be subjected to crosslink interference from one or more neighboring cells or pose crosslink interference to one or more user equipments of one or more neighboring cells after transmitting the reporting information.

7. The transmission apparatus according to claim 2, wherein the reporting information and the notification information are carried in a time unit structure containing downlink data, in a time domain, the time unit structure sequentially carrying the notification information, the reporting information and the downlink data;
or the reporting information and the notification information are carried in a time unit structure containing uplink data, in a time domain, the time unit structure sequentially carrying the notification information, the reporting information and the uplink data.

8. The transmission apparatus according to claim 7, wherein the information on a transmission direction in the notification information indicates a data transmission direction in a local time unit or a data transmission direction/data transmission directions in one or more time units after the local time unit;
and the information on a transmission direction in the reporting information indicates a data transmission direction/data transmission directions of the serving cell or the one or more neighboring cells in a local time unit or a data transmission direction/data transmission directions of the serving cell or the one or more neighboring cells in one or more time units after the local time unit.

9. The transmission apparatus according to claim 7, wherein the time unit structure further carries downlink control information after the reporting information, the downlink control information being transmitted by the serving network device or the one or more neighboring network devices in a case where crosslink interference is discovered, to adjust scheduling of a user equipment for transmitting data.

10. The transmission apparatus according to claim 2, wherein the reporting information and the notification information are carried in a time unit structure containing downlink data, in a time domain, the time unit structure sequentially carrying the notification information, the downlink data and the reporting information;
or the reporting information and the notification information are carried in a time unit structure containing uplink data, in a time domain, the time unit structure sequentially carrying the notification information, the uplink data and the reporting information.

11. The transmission apparatus according to claim 10, wherein the information on a transmission direction in the notification information indicates a data transmission direction/data transmission directions in one or more time units after a local time unit;
and the information on a transmission direction in the reporting information indicates a data transmission direction/data transmission directions of the serving cell or the one or more neighboring cells in one or more time units after the local time unit.

12. A transmission apparatus of suppressing interference information, configured in a network device performing dynamic time division duplex, the transmission apparatus comprising:
a receiving unit configured to receive reporting information used for suppressing dynamic time division duplex crosslink interference transmitted by one or more user equipments of a local cell or a neighboring cell;
wherein, the reporting information comprises one or more pieces of the following information:
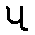 nformation on a transmission direction of a serving cell of the user equipment within a specific time range, information on a transmission direction/transmission directions of one or more neighboring cells of the user equipment within a specific time range, indication information indicating whether the user equipment has measured crosslink interference from one or more neighboring cells before transmitting the reporting information, indication information indicating whether the user equipment generates crosslink interference to one or more user equipments of one or more neighboring cells before transmitting the reporting information, information on a result of measurement of crosslink interference from one or more neighboring cells, information on a position of a resource of the user equipment subjected to crosslink interference or posing crosslink interference to one or more other user equipments before transmitting the reporting information, and information on a position of a resource of the user equipment possibly subjected to crosslink interference or posing crosslink interference to one or more other user equipments after transmitting the reporting information.

13. The transmission apparatus according to claim 12, wherein the transmission apparatus further comprises:
a notifying unit configured to transmit notification information to one or more user equipments of the local cell or the neighboring cell;
wherein, the notification information comprises one or more pieces of the following information:
information on a transmission direction of the local cell within a specific time range, information on transmission power of the user equipment for transmitting the reporting information, information on a time of the user equipment for transmitting the reporting information, and information on a user equipment transmitting the reporting information.

14. The transmission apparatus according to claim 13, wherein the transmission apparatus further comprises:
a configuring unit configured to configure the user equipment with one or more time-frequency resources for transmitting the reporting information and/or one or more time-frequency resources for receiving the notification information.

15. The transmission apparatus according to claim 14, wherein the transmission apparatus further comprises:
a negotiating unit configured to negotiate with one or more neighboring network devices for the one or more time-frequency resources for transmitting the reporting information and/or the one or more time-frequency resources for receiving the notification information by the user equipment.

16. The transmission apparatus according to claim 13, wherein the reporting information and the notification information are carried in a time unit structure containing downlink data, in a time domain, the time unit structure sequentially carrying the notification information, the reporting information and the downlink data;
or the reporting information and the notification information are carried in a time unit structure containing uplink data, in a time domain, the time unit structure sequentially carrying the notification information, the reporting information and the uplink data.

17. The transmission apparatus according to claim 16, wherein the information on a transmission direction in the notification information indicates a data transmission direction in a local time unit or a data transmission direction/data transmission directions in one or more time units after the local time unit;
and the information on a transmission direction in the reporting information indicates a data transmission direction/data transmission directions of the serving cell or the one or more neighboring cells in a local time unit or a data transmission direction/data transmission directions of the serving cell or the one or more neighboring cells in one or more time units after the local time unit.

18. The transmission apparatus according to claim 13, wherein the reporting information and the notification information are carried in a time unit structure containing downlink data, in a time domain, the time unit structure sequentially carrying the notification information, the downlink data and the reporting information;
or the reporting information and the notification information are carried in a time unit structure containing uplink data, in a time domain, the time unit structure sequentially carrying the notification information, the uplink data and the reporting information.

19. The transmission apparatus according to claim 18, wherein the information on a transmission direction in the notification information indicates a data transmission direction/data transmission directions in one or more time units after the local time unit;
and the information on a transmission direction in the reporting information indicates a data transmission direction/data transmission directions of the serving cell or the one or more neighboring cells in one or more time units after the local time unit.

20. A communication system, comprising:
a user equipment comprising the transmission apparatus of suppressing interference information as claimed in claim 1; and
a network device comprising the transmission apparatus of suppressing interference information as claimed in claim 12.
